# EUROPEAN PATENT SPECIFICATION

(11) **EP 0 465 099 B1**
(45) Date of publication and mention of the grant of the patent: **06.09.1995**
(21) Application number: 91305752.7
(22) Date of filing: 25.06.1991
(51) Int. Cl.: H02G 5/04

(54) **A cable duct for cables and conductors and outlet boxes to be connected thereto**
Kanaleinrichtung für Kabel und Leiter und Steckdosen, die damit verbunden werden
Canalisation électrique pour câbles et conducteurs et boîtes de connexion à connecter avec celle-ci

(30) Priority: 29.06.1990 FI 903310
(43) Date of publication of application: 08.01.1992
(73) Proprietor: NOKIA ALUMIINI OY, 00210 Helsinki (FI)
(72) Inventor: Valtonen, Rainer, SF-02230 Espoo (FI)
(74) Representative: Howden, Christopher Andrew

(56) References cited:
- WO-A-87/01524
- DE-A- 3 628 672
- US-A- 4 688 869

## Description

This invention relates to a cable duct for cables and cords and outlet boxes to be connected thereto, the cable duct comprising a case-like channel track forming at least one cable space for cables and cords and having a front plate provided for outlet boxes with an installation slot facing the cable space; and a cover plate covering the installation slot.

It is known from the prior art to use a cable duct system in apartments, offices, staircases and the like, the required cables and conductors for electricity, telephone, antenna, etc., being encased in a cable duct extending along a desired wall/desired walls. Only socket outlets and other outlets and connections mounted in the front plate of the cable duct for use at various points are outwardly visible. All cords, outlet boxes and installation equipment are invisible within the case-like channel track. The outlet boxes are attached to the channel track in such a way that their cover plates are positioned substantially flush with the cover of the installation slot. The outlet boxes may be installed side by side in contact with or spaced apart from each other. Openings possibly remaining between the boxes are covered with cover plates of suitable size.

Today all cables and conductors in a cable duct are positioned loosely in the cable space of the channel track either on the bottom of the cable space, in its different compartments or on separate shelves. For connecting socket outlets, junction boxes and other required outlet boxes, the respective electrically insulated cable or conductor has to be drawn out from the cable space and connected electrically to the socket outlet box, etc. at a desired point of the cable duct. This makes the installation and connection of outlet boxes difficult and time-consuming, and a great number of different tools are frequently needed.

It has been suggested previously to replace a round power cable with a band-like cable and to provide the outlet boxes with special connectors which cut through or penetrate into the insulation of each conductor to be connected in such a way that the conductor need not be separately revealed at the connection point. This does make the connection of outlet boxes somewhat easier; however, an electrician is still needed for the installation and connection of the boxes.

WO87/01524 discloses an electrical supply rail system comprising a channel track of insulating plastics adapted to extend along a wall at the junction between wall and floor, the channel track having a plurality of longitudinal channels extending from its exposed surface, each channel having longitudinal slots or passages opening onto the upper surface of the respective channel, each such slot receiving a respective electrical conductor extending therealong. Electrical branching devices such as power sockets are provided having portions which can be inserted into said channels and which have conductors for engagement with said electrical conductors. However, the channel track provides no space for cables such as electric cables, telephone cables or antenna cables.

DE-A-3628672 discloses a rail of insulating material carrying current conductors, the rail being integrated in a displaceable wall element. The rail is provided with a channel for communications cables, which channel is completely separate from another channel provided for current conductors, the channels being separated by a transverse wall.

The object of the present invention is to provide a cable duct which avoids the above-mentioned drawbacks and in which the conductors of a power cable can be kept bare over the whole length of the channel track so that they are ready to be connected to outlet boxes at any point of the channel track.

According to the invention, there is provided cable duct for cables and cords and outlet boxes to be connected thereto, the cable duct comprising a case-like channel track forming at least one cable space for cables, cords and current conductors for electrical connection with outlet boxes and having a front plate supporting the outlet boxes with an installation gap facing the cable space; and a cover plate covering the installation slot; characterised in that a conductor rail including fixed longitudinal bare current conductors is provided in the cable space of the channel track, whereby the current conductors of the conductor rail extend in the cable space along the inner surfaces of the front plate and the back plate respectively of the channel track.

The invention is based on the idea that the conductors of the power cable are arranged to run in the cable space of the channel track in much the same way as do the conductors in a conductor rail known *per se*, for example in a conductor rail such as disclosed in Finnish Patent Specification No. 44019, whereby it is possible to use bare conductors ready to be connected at any point of the channel track. Thus, the connection of outlet boxes does not require any connection measures with respect to the conductors of the cable.

For a cable duct of this type, socket outlets, junction boxes and other similar boxes to be connected to the power cable conductors are preferably made similar to known current supply devices developed for conductor rails, with the modification that the current supply devices now take into account the size of the installation slot of the cable duct and the position of the current conductors in the channel track with respect to the installation slot. This kind of current supply devices are disclosed e.g. in Finnish Patent Specifications 44019 and 47236 (push/pull contacts), GB Patent Specification 1 329 663 (turnable contacts) and GB Patent Specification 1 000 925 (pivotable contacts).

In the cable duct of the invention, outlet boxes can be connected to the current conductors without any installation or connecting measures which would require an electrician. The user may himself carry out the connection and fastening to the channel track of the cable duct by a simple movement of the hand.

The invention will be described in greater detail in the following with reference to the attached drawings, in which
Figure 1 is a perspective view of a cable duct arrangement in which a cable duct and outlet boxes according to the invention are used;
Figure 2 is an enlarged cross-sectional view of the channel track of the cable duct;
Figure 3 is a perspective view of one preferred embodiment of a current supply device to be used in the cable duct of the invention; and
Figure 4 is a perspective view of the different steps for connecting the current supply device of Figure 3 to the cable duct of the invention.

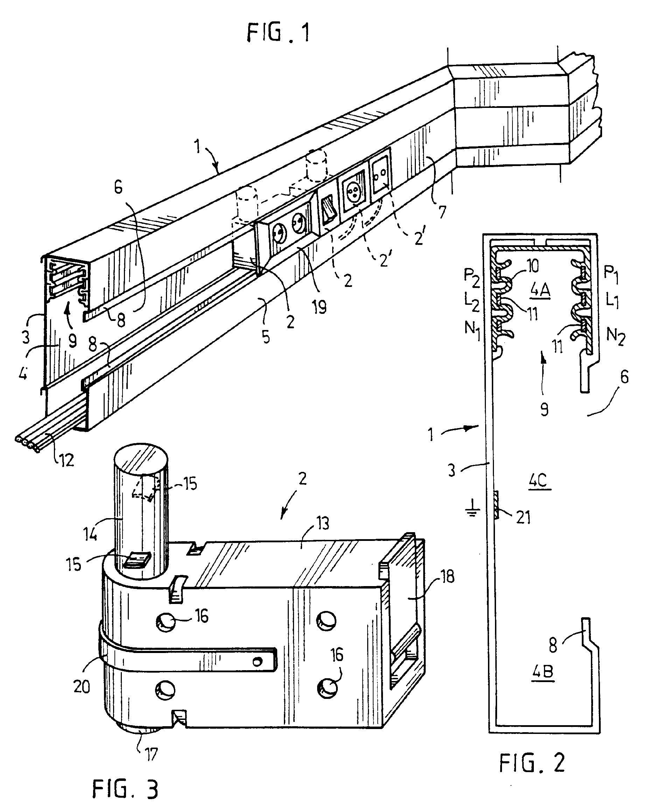

The cable duct system shown in Figure 1 of the drawings mainly comprises a cable duct 1 and a number of outlet boxes 2 provided with electrical equipment and cover plates. The cable duct comprises a metallic, case-like channel track 3 having a rectangular cross-section. The channel track comprises an internal cable space 4 and an installation slot 6 in a front plate 5, the installation slot being covered with an openable cover plate 7. Both longitudinal edges of the installation slot are formed into fastening edges 8 for outlet boxes.

The cable space 4 of the channel track forms an upper space 4A, a lower space 4B and an outlet box space 4C positioned therebetween. According to the invention, a conductor rail 9 is provided in the upper space of the cable space of the channel track; in this specific case, the conductor rail replaces a conventional cable for the cable duct. The conductor rail comprises an insulation strip 10 and a number of current conductors 11 embedded in it. The current conductors are grouped so as to be positioned on the inner surfaces of the front and back plates of the channel track.

Other cables and cords 12 in the cable duct are positioned in the lower space of the channel track and connected to the connectors of the corresponding outlet boxes 2′, such as telephone and antenna outlets.

Figure 3 of the drawings shows an outlet box 2 suitable for the conductor rail of the cable duct. In this specific case, the outlet box is a current supply device forming a base for a socket outlet. The current supply device comprises a case-like frame 13 and a contact pin 14 projecting from one narrow side of the frame. From the contact pin, two contact fingers 15 project in opposite directions, one of which is preferably axially adjustable in the contact pin. The frame is provided on both sides with pairs of openings 16 for contact plugs, and electrical connections for the contact fingers are provided within the frame.

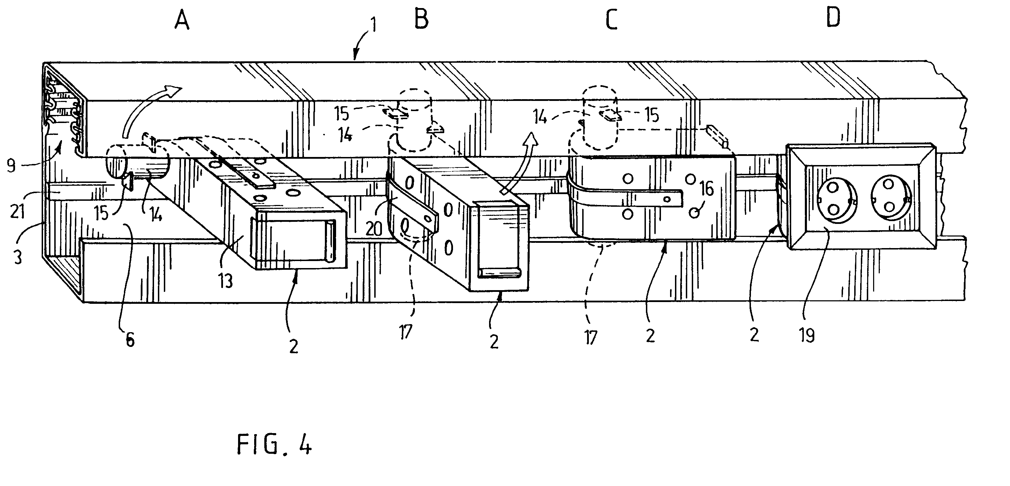

The frame and the contact pin of the current supply device are dimensioned and shaped according to the height of the installation slot of the channel track and the position and dimensions of the conductor rail in such a way that the current supply device can be connected electrically to the conductor rail and fastened to the channel track as shown in Figure 4.

The current supply device is first inserted in a horizontal position in the installation slot of the channel track with the pin end ahead so as to be pressed against the back wall of the cable space, step A in Figure 4. Thereafter the frame is turned through 90° into a vertical position in such a manner that the frame is still positioned perpendicularly to the channel track and the contact pin points upwards. The contact pin thereby extends into the conductor rail between the two current conductor groups. A retaining shoulder 17 on the bottom of the frame is positioned behind the lower edge of the installation slot and keeps the frame in position in the installation slot, step B. The frame is then turned through 90° in a sideward direction, so that the whole frame is displaced within the channel track and the front surface of the frame is positioned substantially flush with the front plate of the channel track. In this position the contact fingers are turned towards the current conductors into contact with the corresponding conductors. A latch 18 at the other end of the frame is now displaced into a locking position, in which it is positioned behind the upper edge of the installation slot, step C. Finally, a cover plate 19 is fastened to the frame, step D. Grounding bows in the cover plate are provided with a prod which makes contact with a grounding strip 20 in the frame, and the grounding strip 20 in turn makes contact with a grounding strip 21 in the back wall of the channel track.

In the embodiment shown in the drawings, the conductor rail is of the type disclosed in Finnish Patent Specifications 44019 and 47236. If required, the current conductors may be grouped in some other way. Even though it seems to be advantageous to position the conductor rail in the upper portion of the cable space, whereby there is no danger of cables and cords or other foreign objects falling on the conductor rail, the conductor rail may, however, be positioned in some other portion of the cable space, if required. As mentioned in the beginning of the description, the cable duct may deviate in type and structure from that shown in the figures, whereby the structure, shape and dimensions of the current supply device change correspondingly. In place of the disclosed socket outlet structure, the frame of the current supply device may be formed e.g. as a connector for connecting an extension cable.

## Claims

1. Cable duct for cables and cords and outlet boxes to be connected thereto, the cable duct (1) comprising
- a case-like channel track (3) forming at least one cable space (4) for cables, cords (12) and current conductors (11) for electrical connection with outlet boxes (2) and having a front plate (5) supporting the outlet boxes (2, 2′) with an installation gap (6) facing the cable space; and
a cover plate (7) covering the installation slot;
**characterized** in that a conductor rail (9) including fixed longitudinal bare current conductors (11) is provided in the cable space (4) of the channel track (3), whereby the current conductors (11) of the conductor rail (9) extend in the cable space (4) along the inner surfaces of the front plate (5) and the back plate respectively of the channel track (3).

2. Cable duct according to claim 1, in which the channel track (3) forms an upper cable space (4A) and a lower cable space (4B) separated by an outlet box space (4C), **characterized** in that the conductor rail (9) is provided in the upper cable space (4A) of the channel track.

3. Cable duct according to claim 1 or 2, **characterized** in that a longitudinal, continuous grounding strip (20) is provided in the cable space (4) of the channel track (3).

4. Cable duct according to any of claims 1-3, **characterized** in that the outlet box (2) is a current supply device known per se having contact fingers (15) for the current conductors (11) of the conductor rail (9).

## Patentansprüche

1. Kabeldurchführung für Kabel und Litzen und damit verbundene Anschlußgehäuse, wobei die Kabeldurchführung (1) umfaßt:
- eine gehäuseartige Kanalführung (3), die mindestens einen Kabelraum (4) für Kabel, Litzen (12) und Stromleiter (11) für die elektrische Verbindung mit den Anschlußgehäusen (2) bildet, und eine Frontabdeckung (5) zum Anschluß der Anschlußgehäuse (2, 2′) mit einem Intallationsspalt (6) aufweist, welcher dem Kabelraum zugekehrt ist; und
- eine Deckplatte (7) zum Abdecken des Installationsspaltes;
**dadurch gekennzeichnet,**
daß eine Leiterscheine (9) mit daran befestigten blanken länglichen Stromleitern (11) in dem Kabelraum (4) der Kanalführung (3) vorgersehen ist, wobei sich die Stromleiter (11) der Leiterschiene (9) im Kabelraum (4) jeweils längs der Innenseite der Frontabdeckung (5) und der hinteren Abdeckung der Kanalführung (3) erstrecken.

2. Kabeldurchführung nach Anspruch 1, wobei die Kanalführung (3) einen oberen Kabelraum (4A) und einen unteren Kabelraum (4B) bildet, die durch einen Anschlußgehäuseraum (4C) voneinander getrennt sind,
**dadurch gekennzeichnet,** daß die Leiterschiene (9) in dem oberen Kabelraum (4A) der Kanalführung vorgesehen ist.

3. Kabeldurchführung nach Anspruch 1 oder 2, **dadurch gekennzeichnet,** daß ein längliches, durchgehendes Erdungsband (20) im Kabelraum (4) der Kanalführung (3) vorgesehen ist.

4. Kabeldurchführung nach irgend einem der Ansprüche 1 - 3, **dadurch gekennzeichnet,** daß das Anschlußgehäuse (2) eine an sich bekannte Stromversorgungseinrichtung mit Kontaktstiften (15) für die Stromleiter (11) der Leiterschiene (9) ist.

## Revendications

1. Canalisation électrique pour câbles et cordons et boîtes de connexion devant lui être connectés, la canalisation électrique (1) comprenant :
- une piste de canal en forme de boîtier (3) formant au moins un espace de câble (4) pour des câbles, des cordons (12) et des conducteurs de courant (11) pour une connexion électrique avec des boîtes de connexion (2) et ayant une plaque avant (5) supportant les boîtes de connexion (2, 2′), ayant un interstice d'installation (6) tourné par l'espace de câble; et
- une plaque de recouvrement (7) recouvrant la fente d'installation; caractérisée en ce qu'un rail conducteur (9) comprenant des conducteurs de courant (11) dénudés longitudinaux, fixes, est prévu dans l'espace de câble (4) de la piste de canal (3), de manière que les conducteurs de courant (11) du rail conducteur (9) s'étendent dans l'espace de câble (4) le long des surfaces intérieures de la plaque avant (5) et de la plaque arrière, respectivement, de la piste de canal (3).

2. Canalisation électrique selon la revendication 1, dans laquelle la piste de canal (3) forme un espace de câble (4A) supérieur et un espace de câble (4B) inférieur, séparés par un espace de boîte de connexion (4C), caractérisée en ce que le rail conducteur (9) est prévu dans l'espace de câble (4a) supérieure de la piste de canal.

3. Canalisation électrique selon la revendication 1 ou 2, caractérisée en ce qu'une bande de mise à la masse (20) longitudinale continue est prévu dans l'espace de câble (4) de la piste de canal (3).

4. Canalisation électrique selon l'une quelconque des revendications 1 à 3, caractérisée en ce que la boîte de connexion (2) est un dispositif d'amenée de courant connu en soi, ayant des doigts de contact (15) pour les conducteurs de courant (11) du rail conducteur (9).
